# EUROPEAN PATENT APPLICATION

(11) **EP 1 406 059 A1**
(43) Date of publication of application: **07.04.2004**
(21) Application number: 02732781.6
(22) Date of filing: 29.05.2002
(51) Int. Cl.: G01B 9/02, G01M 11/00

(54) **OPTICAL CHARACTERISATION DEVICE USING AUTOMATICALLY-CONTROLLED IMAGES**

(30) Priority: 29.05.2001 ES 200101231
(71) Applicant: UNIVERSIDAD COMPLUTENSE DE MADRID, E-28040 Madrid (ES)
(72) Inventor: BERNABEU MARTINEZ, Eusebio, E-28040 Madrid (ES); ALONSO FERNANDEZ, José, E-28040 Madrid (ES); CANABAL BOUTUREIRA, Hector, E-28040 Madrid (ES)
(74) Representative: Carpintero Lopez, Francisco
(86) International application number: PCT/ES2002/000257
(87) International publication number: WO 2002/097361

(57) **Abstract**

The invention relates to an optical characterisation method that uses automatically-controlled images comprising a system that is used to display images, a system that is used to capture said images and a system that is used to control the latter two systems and to analyse the information relating to the captured images. The optical element to be examined is positioned in such a way that the light rays from the image-forming system pass through said element and are reflected by it. The analysis of the image(s) registered can be used to obtain one or more of the optical characteristics of the object examined. By controlling the images used, the measurement characteristics (range, sensitivity, speed, etc.) can be adjusted in order to produce the optical characteristics according to the specific requirements.

## Description

### Object of the Invention

The present invention relates to an apparatus used for the characterisation of optical elements which uses a system that shows images and another one that captures said images and the same images modified and/or altered by the optical effect of the element to be characterised.

### Background of the Invention

At present, there are a large number of techniques and apparatus for the measurement and characterisation of optical elements {"Optical Shop Testing", Published by Daniel Malacara, Wiley Interscience, USA (1992) and O. Kafri, "Noncoherent method for mapping phase objects", Optic Letters, 5,12, 1980}. Some of them {US Patent # 5.066.199, Optical device for phase detection testing optical systems, especially ophthalmic lenses, Essilor International, 1991 and US Patent # 5.440.383, Phase detection deflectometer-type optical device having a large measurement range, Esiilor International, 1995} are based on Moiré deflectometry, in which two Ronchi grids form a fringe pattern that alters when the illuminating beam, before passing through the grids, passes through the optical element to be characterised. Numerous different algorithms {D.J. Bone, H.-A. Bachor, and R.J. Sandeman, "Fringe-pattern analysis using a 2-D Fourier transform", Appl. Opt., 25, 1653-1660, 1986, H. Canabal, J.A. Quiroga, E. Bernabeu, "Improved Phase-Shifting Method for Automatic Processing of Moire Deflectograms", Appl. Opt., 36, pp 6227-6233. 1998} allow extracting, with different degrees of accuracy, the characteristics of the aforementioned optical element from the deformation of the moiré fringes. Other techniques are based on the Hartmann or Ronchi Test { "Optical Shop Testing", Published by Daniel Malacara, Wiley Interscience, USA (1992) }. All these techniques are based, to a greater or lesser degree, on the use of grids or reticles, complicated auxiliary optical systems, coherent light sources (laser), microlens matrices or masks with groupings of orifices.

Currently, the global characterisation of an optical element with the existing techniques requires various steps that are difficult to automate. For example, in the case of the systems based on Moiré deflectometry, the distance between grids must be adjusted to optimise the measurement system sensitivity. The angle between grids must also be varied to adjust the carrier frequency of the fringe pattern. One or several of these operations must be carried out to when it is necessary to find the points of the optical element producing null deflexion, this is, to measure the deflexion in absolute terms. The position of the element is also critical since its distance from the control elements (grids, diaphragms or microlens groupings) must be adjusted according to the maximum deflexion of the element to be measured and the sensitivity required. In the case of ophthalmic lenses of the bifocal or multifocal kind, this could require the repetition of the measurement process for the different optical areas of this type of elements.

When it is necessary to characterise elements without symmetry of revolution, such as off-centre optical elements or cylindrical or, in general, astigmatic lenses, the described techniques must be applied in two perpendicular directions, thereby multiplying the number of steps involved in the characterisation. This, at least, doubles the processing time and requires introducing new degrees of freedom in the measurement systems. An automated characterisation system would require motorised systems that further complicate and increase the expense of the assemblage and the control software.

In general, the techniques described for the characterisation and quality control of optical elements cannot be directly generalised for the measurement of other elements that modify the light beam phase, such as glass or plastic plates with a possible curvature and transparent mediums with internal variations in the refraction index. For the measurement or quality control of these elements different techniques or complex adaptations of the previously analysed techniques are required.

In ("Measurement of phase objects by simple means", J.H. Massig, Applied Optics, 38, 19, 1999), a method for measuring the phase of a beam that has refracted through a light-deflecting medium is presented. This method consists of analysing the deformed image of a grid printed on paper (reference image) when it is observed through a light-phase modification element. The method proposed in this article is simple and easily implemented, but it is limited in that it is impossible to modify the shape of the reference image to adapt it to the optical power, shape or size of the object to be characterised or measured, thus rendering it unviable for use as a general system for the characterisation of optical elements.

### Description of the Invention

Apparatus for optical characterisation using automatically controlled images.

The invention relates to an automatic and simple method for the characterisation of optical elements, as well as light deflectors or, in general, refracting or reflecting objects that vary the phase of a light beam that refracts in or reflects on them. Examples of these objects may be lenses, mirrors and prisms, within the scope of optical elements, automobile windshield wipers, glass for windows, ornamental or commercial mirrors and, in general, glass or plastic plates with a degree of transparency. The technique also covers the measurement of mediums with an index gradient.

The present invention makes reference to an optical characterisation method that allows getting around the problems of currently-available techniques by eliminating the need for mechanical systems for positioning objects (mirrors, field glasses, focusing lenses, grids, auxiliary elements and the same optical elements to be characterised) and by allowing a simple automation of the entire measurement process. In addition, the method object of this patent requires little processing time, thus allowing the characterisation of optical elements in real time.

The optical characterisation method that this invention refers to is characterised in that it requires the following elements: an image display system, a system to capture said displayed images and a system for analysis of the captured images. These systems can be independent, connected to one another or can be integrated in one or two systems. In particular, a control system, for example a computer, can integrate the tasks of analysis and coordination of the display and image capturing sub-systems. The image display system can be connected to said control system and can be, for example, a monitor or television screen (regardless of the screen technology, such as CRT, TFT, plasma or others) or a projector (such as a slide projector or one based on LCD or micro-mirrors, or others). The images shown on said system cam be generated instantly or can be generated previously, either physically or virtually. The image-capturing system which must be connected or be connectable to the control system or, at least, to an analysis system can be, for example, a camera (whether it be CCD or CMOS or other). A device configured by these systems can be simple and economic, ensuring the possibility of its commercialisation.

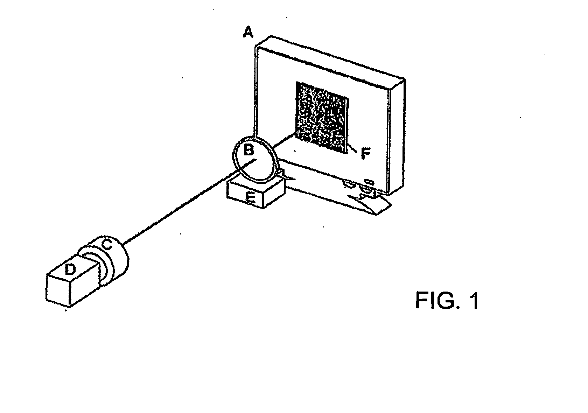

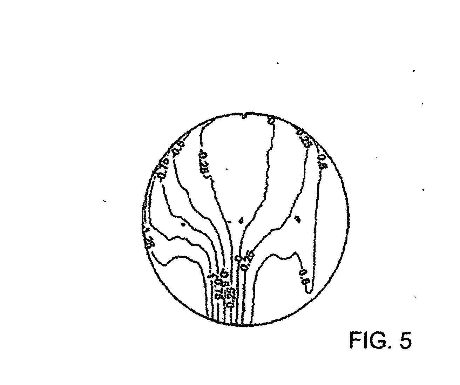

The device shown is particularly appropriate for measuring optical properties related to the variations of wave fronts (in geometric terms, with the deviations of the light beams) produced by the object being studied. Particularly, the configuration described by Figure 1 has been tested to obtain light beam deflexion maps (prism effect) from which we can obtain information on the power and focal point of the lens, as well as the information on the optical path it introduces. As an example, figure 5 shows an optical deflexion map obtained by the described apparatus when characterising a progressive ophthalmic lens.

The present invention is also appropriate to characterise other optical properties of the object related to variations or deviations in the light-beam or wave front paths; specifically and by way of example, in a non-limiting sense, the following are mentioned: refraction index, power, focal length, optical path, wave front variation, or any derived from said variation. Likewise, by means of an adequate calibration, the device is capable of measuring optical properties of the object that manifest themselves in a variation of the image intensity, such as transmittance, reflectance, angular dispersion co-efficient or the modulation transfer function (MTF) and contrast transfer function (CTF). It is also important to remark that if the display system used has colour possibilities, it is possible to measure any of the previously described parameters according to the colour or wavelength of a spectrum.

The method proposed in this invention is simple and easily implemented. In comparison with other existing methods, it has the advantage of not requiring systems that are complex to position or align. It does not require incoherent light systems, and thus it does not suffer from the drawbacks associated to systems requiring coherent light, such as speckle.

Likewise, the device introduced presents various options (that can be used combined or separately) for adjusting one or various the measurement characteristics, for example: the sensitivity, the range, the resolution or the area where the measurement is made, as well as for compensating some of the characteristics of the measured object, such as its shape, its power or its spatial transmittance or reflectance distribution. Among the options that allow making this type of adjustments is, firstly, the fact that the images displayed are not fixed but instead that all their characteristics can be controlled (for example, the image frequency). Equally important is the possibility of modifying the position of the object being studied with respect to the position of image formation and of the other systems. Additionally, the method allows incorporating one or more optical elements (for example, a compensating lens, a reference or null lens, a zoom system, etc.), whether it is before or after the optical system to be characterised with the purpose of adjusting the aforementioned measurement characteristics.

In this way, the measurement characteristics of the device are fully adjustable and, thus, make viable its versatile use as a general system for characterisation of optical elements.

### Description of the Drawings

As part of the description being made, for purposes of illustration only and in a non-limiting sense a set of drawings is accompanied in order to aid a better understanding of the operation and characteristics of the invention:
Figure 1 shows a side view of a possible configuration of the device, formed by: a system (A) that displays the images (F), a lens or image formation system (C), an image capturing or acquisition system (D) and a support (E) that allows positioning the object to be studied (B).

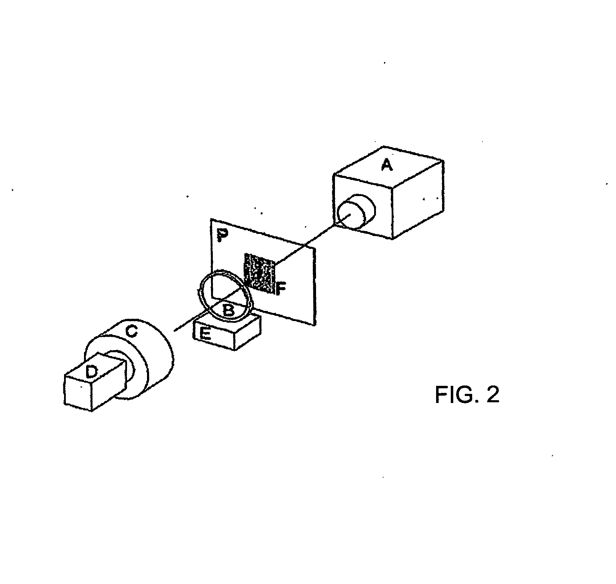

Figure 2 shows a side view of another possible configuration of the device, formed by: a projection system (A), that forms an image (F) on a plane (P), also having a system (C) that forms images on a detector (D) and a support (E) for the object to be studied (B).

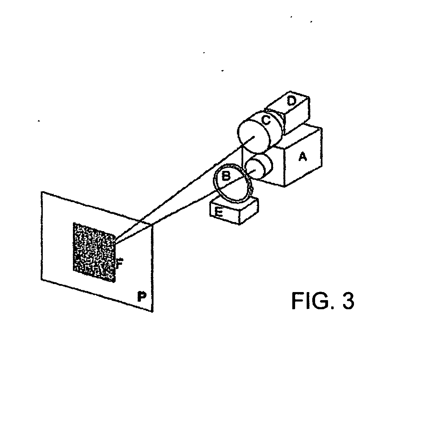

Figure 3 shows a side view of another possible configuration of the device, formed by the same elements describe in figure 2, showing the possible alternative embodiment in which the image projection (A) and capturing (C-D) system are both next to the object (B), while the screen (P) is on the opposite side.

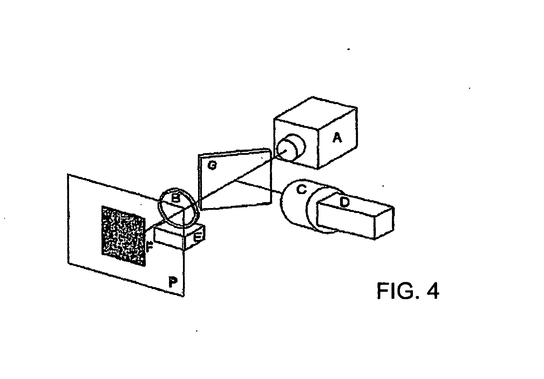

Figure 4 shows a side view of another possible configuration of the device, formed by the same elements described in the system in figure 3 showing the possible alternative embodiment in which a double-pass system is formed, using a system (G) that is semi-transparent for the projection system (A) and semi-reflective for the capturing system (C-D).
Figure 5 shows one of the deflexion maps obtained with the apparatus described by figure 1 when characterising a progressive ophthalmic lens. Specifically, the figure shown represents the horizontal component (Pₓ) of the optical deflexion obtained by analysing the vertical fringe images. A contour-line representation is used. The measured lens has an approximate diameter of 60cm. The spatial sampling of the measurement is 512x512 pixels. The information has been obtained by showing images with controlled shifts and periods and by analysing the images obtained by phase shifting algorithms and temporary phase unwrapping.

### Preferred Embodiment of the Invention

A form of embodiment of this invention, not limiting its scope, is shown in figure 1. A system (A) shows images (F) generated in a controlled fashion by a computer or electronic system. These images (F) are collected by means of a lens (C) in an image capturing system (D). The images generated by the system (A) can be Ronchi grids, sine wave grids, images with periodicity, colour or frequency coded images or, in general, any type of image. These images collected by the capturing system (D) can be processed instantaneously or stored for later analysis. The element to be characterised (B) is place on a support (E) in an adequate position between the image generating system and the capturing system. When the images (F) formed by the image forming system (A) can be seen through the element to be characterised (B), these are distorted or deformed due to the optical effect of the element. The analysis of the direct images (F) (also called reference images) and the images deformed by the optical effect of the element (B) allow obtaining, among other, information on the deflexion angles of the light beams that pass through said element. Among others, the power and/or local thickness of said element can be obtained from this information {J.A. Gómez-Pedrero, J. Alonso, H. Cañabal and E. Bernabeu, " A Generalization of the Prentice's law for lenses with arbitrary refracting surfaces", J. Ophtal. Physiol Opt. 18, 514-520 (1998)}.

Another example illustrating but not limiting the disclosed system is shown in figure 2. With the geometry proposed in this figure, a projection system (A) controlled by an electronic or computerised equipment forms an image (F) on an established plane (P). This image can be obtained by means of an LCD, an MEM micro mirrors system or even more simple but less flexible systems, such as by slides. Said image serves as the object for the optical system (C) placed before the image acquisition system (D), in such a way that the image generated by the projector forms on the surface of the acquisition system detector. When the element to be characterised (B) is placed immediately after the image plane (P), the image formed in the acquisition system is distorted and, just as in the system describe in figure 1, the information on the resulting deflexions at each point of the optical element (B) to be characterised is obtained from the direct measurement and the processing of the deformations. The plane (P) does not need to have physical reality, since in this transmission arrangement it is not necessary that the image (F) forms on a physical plane (screen or the like) for the optical system (C) of the image acquisition system to form an image on the image sensor.

Figure 3 shows another functional implementation of the present invention. In this configuration, the image generated by the projector (A) forms on the plane (P), which in this case is comprised of a physical plane (screen or the like), in the reflection configuration. In a similar way, figure 4 shows an implementation with the same principle in which a semi-mirrored or semi-reflecting element (such as a beam-splitter) (E) is used, thereby forming a dual-pass system. The previous configurations, exemplified in the case of examining objects by transmission, can be modified in such a way that they allow studying objects by reflection or scattering.

The present invention, in any of the previously described implementations, or any variation using the same principle, allows an automatic measurement of the various optical properties of the examined elements.

## Claims

1. Device for the optical characterisation of objects that modify the phase of a light beam, comprising an image display system, an image acquisition and digitalisation system, a system that captures said images modified by the phase-modifying element to be **characterised** supported in a positioning system and interposed between the image formed by the system that shows images and means for controlling the previous systems and for processing the acquired information that provide information of the characterisation of said phase modifier element.

2. Optical device for the characterisation of phase-modifying objects, as claimed in claim 1, in which the display system consists of a monitor of any type of technology (CRT, flat screens, plasma screens, TV screens or other).

3. Optical device for the characterisation of phase-modifying objects, as claimed in claim 1, in which the display system consists of light emission or projection means that allow varying or controlling the images displayed, whether by mechanical, digital or analogical means (such as slide projectors or LCD-based projectors, TFT, micro-mirrors or similar).

4. Optical device for the characterisation of phase-modifying objects, as claimed in claims **1, 2 and 3** in which the image capturing system consists of digital capturing means or analogical capturing means (such as CCD cameras, CMOS cameras, photodetectors, lineal arrays or the like).

5. Optical device for the characterisation of phase-modifying objects, as claimed in claims **1, 2, 3 and 4** in which the image capturing system obtains said images by transmission through the object to be **characterised**.

6. Optical device for the characterisation of phase-modifying objects, as claimed in claims **1, 2, 3 and 4** in which the image capturing system obtains said images by reflection on the object to be **characterised**.

7. Optical device for the characterisation of phase-modifying objects, as claimed in claims **1, 2, 3 ,4, 5 and 6** in which one or more optical elements are used that allow compensating or decompensating a particular optical property of the object to be **characterised**.

8. Optical device for the characterisation of phase-modifying objects, as claimed in claims **1, 2, 3 ,4, 5 and 6** in which one or more optical elements are used that allow modifying the measurement range, the area to be measured, the resolution and the sensitivity of the device.

9. Optical device for the characterisation of phase-modifying objects, as claimed in claims **1, 2, 3 ,4, 5, 6, 7 and 8** in which any type of images are used that can be manually or automatically analysed, whether these images are periodic or not (such as fringe patterns, Ronchi or sine wave grids, square grids, point grids, colour gradient images, multiple frequency images or multiplexed images or others).
